# EUROPEAN PATENT APPLICATION

(11) **EP 1 710 210 A1**
(43) Date of publication of application: **11.10.2006**
(21) Application number: 06381015.4
(22) Date of filing: 04.04.2006
(51) Int. Cl.: C02F 9/00, C02F 1/44

(54) **Portable water treatment plant**

(30) Priority: 05.04.2005 ES 200500765 U
(71) Applicant: Dinotec Sociedad de Aguas y Medio Ambiente, S.L., 41016 Sevilla (ES)
(72) Inventor: Martínez Díaz, Ricardo J Dinotec Soc. de Aguas, 41016, Sevilla (ES)
(74) Representative: Urizar Anasagasti, Jesus Maria

(57) **Abstract**

The present invention relates to a portable water treatment plant, integrating all the necessary elements to make raw water potable, including saltwater for its desalination by reverse osmosis, in which all the elements forming the plant are strategically arranged and are assembled inside an enveloping, rigid and resistant steel structure (1), having a significantly parallelepiped shape, suitable for being transported in truck-like vehicles, or in the cargo hold of a commercial airplane, inside a standard container, its components being distributed in a single module or in two modules that can be connected by quick connections.

## Description

### Object of the Invention

The present invention relates to a portable water treatment plant that integrates all the necessary elements to make river water, seawater or brackish well water, i.e. water with high microorganism content or with excess salts, potable. Raw water is taken in by a submersible pump provided with the plant, then the necessary chemicals are added: coagulants and flocculants, and the water is passed through the necessary decanting and filtration enclosures in which decantable and filterable particles in suspension and certain chlorine-resistant microorganisms are retained. When sea or brackish water is treated, it is pumped through a reverse osmosis desalination membrane system, and whether or not it is saltwater, a hypochlorite booster dose that will maintain the chlorine level necessary to ensure that the water is potable is then added to the water obtained.

In the current world, in case of catastrophe or war, a prodigious accumulation of human beings in refugee camps improvised or urgently prepared by humanitarian aid teams occurs. Curiously, it is easier to find petroleum than potable water suitable for consumption in these camps. To solve this problem, the plant of the present invention has been devised, which is easily transported in a pick-up truck-like vehicle, or in the cargo hold of a commercial airplane, so that it can be quickly carried with the rest of humanitarian aid to the nearest airport and then to the place where it is to be used, be it on a truck or by its own means, pulling on it to move it with its own wheels.

### Background of the Invention

There are no currently known water treatment plants that can be easily transported by conventional air transport, having to resort to very specialized cargo planes for their transport (Antonov 124 or military planes e.g. Hercules); nevertheless, there is a reference in document ES-1052450 which describes a compact and independent system for providing potable water and electric power that is provided for use preferably in coastal areas with a small population, with a shortage of potable water, and of water for other uses, comprising a container module defining a transportable enclosure that can be implanted in any place, the inside of which is divided into two independent areas or compartments, a desalinating plant assembly area and a power generating set assembly area, having provided ventilation means with contaminated air outlet grids for the cooling of both desalinating plant and diesel power generating set equipment and apparatus, which is capable of electrically feeding the different desalinating plant equipment and apparatus, as well as the illumination and internal electrical consumption, of the container module itself, and external electrical consumption which may be required. The desalinating plant comprises: a seawater catchment pump, a sand filter and a cartridge filter, a high pressure pump for sending seawater to the corresponding osmosis module, derived of which there are two branches for brine discharge and for desalinated water discharge.

### Description of the Invention

All the elements forming the plant of the present invention are strategically incorporated and are fixed inside an enveloping, rigid and resistant steel structure which has a configuration which coincides with that of the standard I.A.T.A. shipping containers (referred to as Aircraft "Unit Load Device ULD"), capable of being shipped in truck-like vehicles or in the cargo hold of a commercial airplane in a standard container, in one or several units arranged so that they occupy space conveniently.

According to another feature of the present invention, the structure forming this plant has various drill holes in the lower area allowing the fixing of a transverse rotation axis in two opposed sides, and optionally, the fixing of a drawbar on one of the other sides. Thus, once they are on land, these water treatment air freight containers can be rolled by a rolling gear that is provided optionally and can be easily coupled thereto.

The water treatment plant assembly can be included in a crate as a lid, which can also be used as a deposit for treated water.

Optionally, this plant structure has support legs in the lower area formed by transversally hollow square bars that also allow loading the plant with a fork-lift truck.

The plant is divided for greater flow rates so that pretreatments (mixing chamber, flocculation chamber, laminated decantation chamber, decanted water deposit and filtration pump) are located in one module, and the remaining treatments (filtration, microfiltration, and the rest of the reverse osmosis plant) are located in the other module. Both modules are interconnected at the operating location by means of quick connectors.

### Description of the Drawings

To complement the description that is being carried out and with the aim of making the understanding of the features of the invention easier, a group of drawings is herein included, in which the following has been depicted by way of illustration and in a non-limiting way:
Figures 1 and 2 depict respective perspective views of a water treatment plant on land and one that can be transported in a standard ULD container.
Figures 3 and 4 depict respective perspective views of a water desalinating plant that has an optimal structure for being transported in a cargo plane.

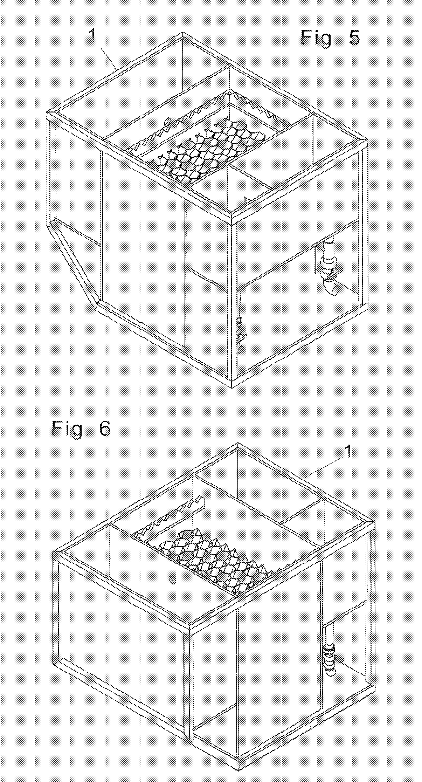

Figures 5 and 6 depict two modules for greater flow rate plants with brackish surface water.

### Preferred Embodiment of the Invention

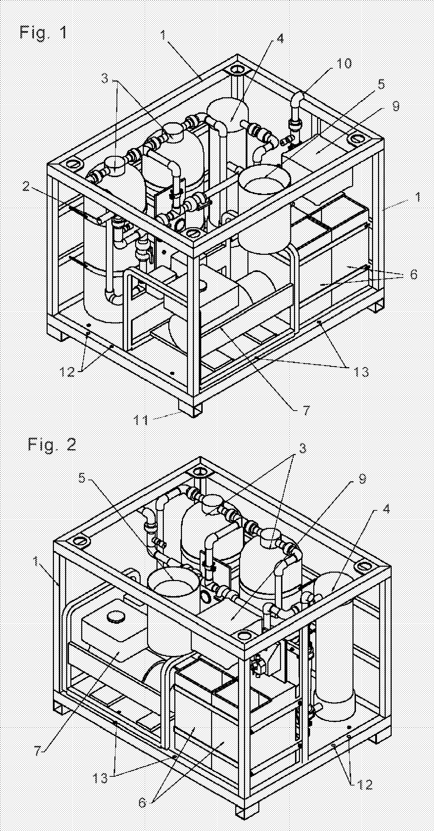

As can be observed in Figures 1 and 2, raw water enters the plant through pipe (2), taken in by a pump (5), a coagulant and hypochlorite being injected into it as a disinfectant before it enters a set of silex anthracite filters (3), where particles of size exceeding 30 micrometres are retained. The filtered water passes through a microfilter (4) that retains infectious microorganisms resistant to chlorine disinfection. Subsequently, it is subjected to a sodium hypochlorite booster dose to leave a residual chlorine level that will assure its bacteriological potability.

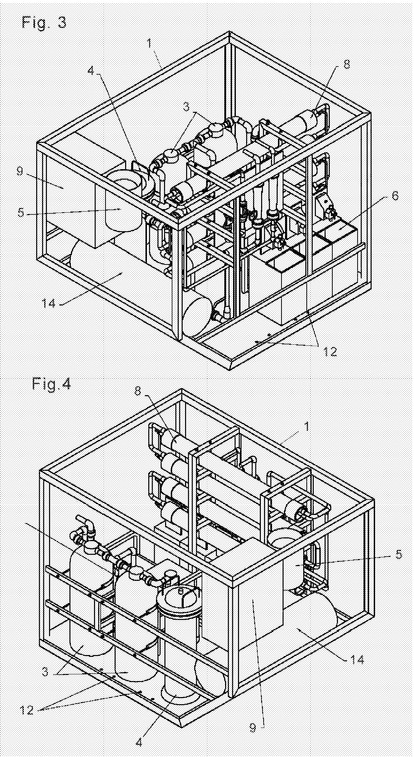

In Figures 3 and 4, a similar plant can be observed in reference to its components, in this case, having ducts (8) containing low pressure membranes for removing salts from water by reverse osmosis.

All these components, together with the reagent deposits (6), the generator (7) and the switchboard (9) of the plant, as well as an optional treated water storage tank (14) for, are strategically distributed and fixed in a rigid and resistant steel structure (1) that has a significantly parallelepiped shape, suitable for being transported in truck-like vehicles, or in the cargo hold of a commercial airplane or inside a standard container

As can be observed in the figures, this structure (1) has several drill holes (12) in its lower area that allow fixing a transverse rotation axis, in two opposed sides, and optionally other drill holes (13) on another side that allow fixing a drawbar.

In Figures 1 and 2, a plant having support legs in its lower area formed by transversally hollow square bars (11), which also allow hauling the plant with a fork-lift truck, can be observed.

Having sufficiently described the nature of the invention as well as a preferred embodiment, it is stated for the record that the materials, shape, size and arrangement of the described elements can be modified, as long as this does not entail altering the essential features of the invention that are claimed below.

## Claims

1. A portable water treatment plant, integrating all the necessary elements to make raw water drinkable, which water taken in by a submersible pump by injecting coagulant into it, before passing it through a double set of filters in which particles in suspension and certain chlorine-resistant microorganisms are retained, and when saltwater is treated, it is pumped through a reverse osmosis desalinating membrane system, the water being microfiltered, and as the case may be, desalinated, and subjected to a hypochlorite booster dose that maintains the chlorine level necessary to ensure its potability, **characterized in that** all the elements forming the plant are strategically arranged and are fixed inside an enveloping, rigid and resistant steel structure (1),having a significantly parallelepiped shape, suitable for being transported in truck-like vehicles, or in the cargo hold of a commercial airplane, inside a standard container, its components being distributed in a single module or in two modules that can be connected by quick connections.

2. A portable water treatment plant according to the previous claim, **characterized in that** said structure has various drill holes (12) in the lower area allowing the fixing of a transverse rotation axis in two opposed sides, and optionally, the fixing of a drawbar in one of the other perpendicular sides, arranging a rolling gear that is optionally incorporated into the plant, together with a crate for a lid that can also be used as a treated water deposit.

3. A portable water treatment plant according to the previous claims, **characterized in that** it optionally has support legs in the lower area formed by transversally hollow square bars (11), which also allow hauling the plant with a fork-lift truck.
